# EUROPÄISCHE PATENTSCHRIFT

(11) **EP 1 238 854 B1**
(45) Veröffentlichungstag und Bekanntmachung des Hinweises auf die Patenterteilung: **26.07.2006**
(21) Anmeldenummer: 02005022.5
(22) Anmeldetag: 06.03.2002
(51) Int. Cl.: B60N 3/10

(54) **Halterungsvorrichtung für Trinkgefässe in Kraftfahrzeugen**
Holding device for beverage containers in automotive vehicles
Dispositif de maintien de récipients à boisson dans des véhicules automobiles

(30) Priorität: 07.03.2001 DE 20103870 U
(43) Veröffentlichungstag der Anmeldung: 11.09.2002
(73) Patentinhaber: KTSN Kunststofftechnik Sachsen GmbH & Co. KG, 01796 Pirna (DE)
(72) Erfinder: Müller, Roland, 01458 Ottendorf-Okrilla (DE); Clemens, André, 01454 Wachau (DE)
(74) Vertreter: Tragsdorf, Bodo

(56) Entgegenhaltungen:
- EP-A- 0 872 377
- EP-A- 1 033 282
- WO-A-84/04072
- DE-A- 4 441 265
- US-A- 4 981 277

## Beschreibung

Die Erfindung betrifft eine Halterungsvorrichtung für Trinkgefäße, insbesondere Getränkedosen oder -flaschen, in Kraftfahrzeugen.

Im Automobilbau gehört es bereits zum Standard der Innenausstattung, daß entsprechende Halterungen zum Abstellen von Getränkebehältnissen vorgesehen sind, die den Personen im Fahrzeug während der Fahrt die Einnahme von Getränken erleichtern sollen. Aus der Praxis sind vor allem Getränkehalter bekannt, die im Cockpitbereich oder in der Mittelkonsole des Fahrzeuges versenkbar angeordnet sind, z.B. durch Schwenk- oder Schubbewegung.

Die durch Schubbewegung bekannten Halterungsvorrichtungen bestehen aus einem Gehäuse und einem aus dem Gehäuse aus- und einfahrbaren Schubteil, das mit mindestens einer Aufnahme für das zu haltende Gefäß verbunden ist. Die Schubteile für die zu haltenden Gefäße sind häufig als stabiles Kunststoffbauteil ausgebildet und weisen entsprechende Öffnungen bzw. Aufnahmen zum Einstellen der Gefäße auf. Für einen Einbau von Halterungsvorrichtungen in der hinteren Mittelkonsole, im Bereich der Stirnseite, zur Benutzung für auf dem Rücksitz befindliche Personen, steht nur ein sehr begrenzter Einbauraum hinsichtlich der Breite und der Tiefe zur Verfügung. Zu berücksichtigen ist dabei noch, daß sich das zur Verfügung stehende Breitenmaß in der Tiefe durch andere funktionsbedingte Einbauten verringert. Die Durchmesser handelsüblicher Getränkebehältnisse liegen in einem Bereich von ca. 50 bis 90 mm.

Aus der DE 44 41 265 A1 ist eine Halterungsvorrichtung gemäß dem Oberbegriff des Anspruchs 1 bekannt, die in ihrer Breite und Tiefe nur ein geringes Einbaumaß erfordert und zum Abstellen von zwei Behältnissen dient. Diese Halterungsvorrichtung besteht aus einer Lade aus einem Schub- und einem Mittelteil, die ineinander verschachtelt aus dem Gehäuse ein- und ausfahrbar sind, wobei einerseits das Gehäuse und das Mittelteil und andererseits das Mittelteil und das Schubteil eine gemeinsame Führung aufweisen, die sich jeweils über eine Länge von mindestens 35 mm erstreckt. An dem Schubteil sind seitlich nach außen zeigende halbkreisförmige Öffnungen angeordnet, wobei an beiden Seiten unter Federspannung stehende, verschwenkbare Seitenarme angeordnet sind, durch die das eingesetzte Gefäß festgeklemmt wird. Außerdem sind an dem Schubteil nach unten ausschwenkbare Auflagefüße angebracht. An der in Auszugsrichtung zeigenden Stirnseite des Schubteils ist eine Blende befestigt, über die die Ein- und Ausfahrbewegung des Schubteils ausgelöst wird. Das Schubteil dieser Halterungsvorrichtung erstreckt sich über die gesamte Breite und Tiefe des Gehäuses. Diese Halterungsvorrichtung ist für den Einbau in einen Einbauraum mit sich in der Tiefe verringerndem Breitenmaß ungeeignet.

Der Erfindung liegt die Aufgabe zugrunde, eine Halterungsvorrichtung für Trinkgefäße in Kraftfahrzeugen, zu schaffen, mit zwei Abstellmöglichkeiten, insbesondere für im Durchmesser relativ große Gefäße, die für einen Einbauraum geeignet ist, der eine geringe Einbautiefe besitzt und ein sich in der Tiefe verringerndes Breitenmaß aufweist sowie eine geringe Einbaubreite, die kostengünstig herstellbar ist und eine hohe Funktionssicherheit und Stabilität gewährleistet.

Erfindungsgemäß wird die Aufgabe durch die im Anspruch 1 angegebenen Merkmale gelöst. Geeignete Ausgestaltungsvarianten sind Gegenstand der Ansprüche 2 bis 12. An dem hinteren Abschnitt des Läufers bzw. Schubteils, der sich in der Gebrauchslage unmittelbar vor der Öffnung des Gehäuses befindet, sind an beiden Seiten in Auszugsrichtung zeigende, seitlich aus- und einschwenkbare Tragarme angeordnet, zwei äußere Tragarme und zwei innere Tragarme. An dem vorderen Ende der äußeren Tragarme ist ein Bodenteil um eine vertikale Achse drehbar befestigt. Dieses ist mit einem senkrecht nach oben gerichteten Wandabschnitt verbunden, der eine der Anlageflächen für die einzustellenden Gefäße bildet. Zum Einstellen von im Außendurchmesser größeren Gefäßen wird der äußere Tragarm weiter nach außen geschwenkt. Der jeweilige innere Tragarm dient als zusätzliche Auflagefläche für das eingestellte Gefäß. Damit sich der jeweilige Wandabschnitt immer in der optimalen Lage zu dem Gefäß befindet, ist zu dessen Lageausrichtung zusätzlich an dem Läufer ein Hebel angeordnet. Durch den mit dem Bodenteil in Eingriff stehenden Hebel wird in Abhängigkeit von der Stellung des äußeren Tragarmes in den verschiedenen Gebrauchslagen I, II und III gewährleistet, daß sich der Wandabschnitt stets in der gleichen Lageausrichtung zur Längsmittelachse des Läufers befindet. Der innere und der äußere Tragarm können eine gemeinsame Drehachse aufweisen und sind separat federbelastet. Die beiden Drehachsen, insbesondere für die äußeren Tragarme, sind in einer gemeinsamen vertikalen Ebene liegend und in gleichem Abstand zur Längsmittelachse des Läufers angeordnet. Es besteht auch die Möglichkeit, den inneren Tragarm an dem äußeren Tragarm federbelastet und drehgelenkig zu befestigen. Der innere Tragarm wird dabei in Richtung zu dem Läufer bewegt. Bei einer U-förmigen Ausbildung der beiden Tragarme kann der innere Tragarm auch in dem äußeren Tragarm versenkbar ausgebildet sein. In der Gebrauchslage I, die unmittelbar nach dem Ausfahren des Läufers bis zum Anschlag erreicht wird, ist der äußere Tragarm durch den inneren Tragarm in eine definierte Stellung nach außen gedrückt, die das Einstellen von Gefäßen mit einem Außendurchmesser von bis zu 53 mm ermöglicht. In der Gebrauchslage II wird der äußere unter Federspannung stehende Tragarm beim Einstellen des Gefäßes weiter nach außen gedrückt und das Gefäß eingestellt. Dabei ist es von Vorteil, wenn die Wandabschnitte der Aufnahmen die obere Abdeckung des Läufers überragen, so daß mit einer Einhandbedienung problemlos das Gefäß gegen den Wandabschnitt gedrückt werden kann und das Gefäß eingestellt wird. In der Gebrauchslage III können Gefäße mit einem Außendurchmesser von bis zu 90 mm eingestellt werden. Die an dem federbelasteten äußeren Tragarm befestigten Wandabschnitte drücken das Gefäß gegen die Außenwand der Läuferabdeckung und den angrenzenden unteren Abschnitt der Blende. In den Gebrauchslagen befindet sich die an dem Läufer drehgelenkig befestigte Blende in einer angekippten Stellung, um das Einstellen der Gefäße nicht zu behindern. Zur Verstellbarkeit der Blende ist diese außerdem in einer Öse des Herzkurvenbauteils eingehängt, das an dem Läufer verschiebbar befestigt ist. Da das Läuferbauteil in der Gebrauchslage geringfügig über die Gehäuseöffnung vorsteht, ist es zweckmäßig, dieses gegen ein Verdrehen zu sichern. Hierzu bieten sich verschiedene Möglichkeiten an, wie z. B. eine gesonderte Führung zwischen dem Läufer und dem Gehäuse. Aufgrund der beim Einstellen von zwei großen Gefäßen auftretenden hohen Belastungskräfte, empfiehlt es sich jedoch, eine zweite Führungseinheit vorzusehen, die in der Höhe versetzt zu der anderen Führung angeordnet werden sollte.

Als Führungseinheit zur Realisierung der Ein- und Ausfahrbewegung des Schubteils bzw. Läufers wird ein bereits bekanntes und bewährtes System eingesetzt, das einen in der Tiefe geringen Einbauraum erfordert. Dieses besteht aus einer in der Rückwand des Gehäuses befestigten Führungsstange, die ca. 5 bis 10 % kürzer ist als die Gehäusetiefe. Auf der Führungsstange ist eine Hülse axialbeweglich geführt ist, die in dem Schubteil bzw. Läufer geführt ist, wobei zur Begrenzung der Ausfahrbewegung des Schubteils die Bewegung der Hülse über einen ersten Anschlag und die

Bewegung des Schubteils über einen zweiten Anschlag begrenzt ist. Das Führungssystem beansprucht lediglich im vorderen Bereich des Läufers eine Breite von ca. 20 mm und im hinteren Bereich, da wo die Tragarme drehgelenkig befestigt sind, von ca. 48 mm.

Im eingefahrenen Zustand des Läufers, also in der Ausgangslage, liegen die Tragarme an den Längsseiten des Läufers an, so daß Läufer und Tragarme lediglich ein Breite von ca. 96 mm beanspruchen. Das Gehäuse ist an den funktionsbedingten Bauraum angepasst und besitzt in seiner horizontalen Ebene einen T-förmigen Querschnitt. Die Seitenwände des Gehäuses weisen im Übergangsbereich von dem breiten zu dem schmalen Gehäuseabschnitt konvex ausgebildete Wandabschnitte auf, die der Außenkontur der Wandabschnitte der Aufnahmen angepasst sind, so daß in der Ausgangslage die Wandabschnitte an den gebogenen Abschnitten des Gehäuse anliegen.

Die Erfindung wird nachstehend an einem Beispiel näher erläutert. In der zugehörigen Zeichnung zeigen
- Fig. 1: die Halterungsvorrichtung im eingebauten Zustand, in perspektivischer Darstellung,
- Fig. 2: die Halterungsvorrichtung als Längsschnitt gemäß der Linie A-A in Fig. 1,
- Fig. 3: die Halterungsvorrichtung im ausgefahrenen Zustand, in der Gebrauchslage I, in perspektivischer Darstellung,
- Fig. 4: einen Schnitt gemäß der Linie B-B in Fig. 3,
- Fig. 5: die Halterungsvorrichtung gemäß Fig. 3 als Draufsicht mit einer eingestellten Getränkedose,
- Fig. 6: die Halterungsvorrichtung im ausgefahrenen Zustand, in der Gebrauchslage II, in perspektivischer Darstellung,
- Fig. 7: die Halterungsvorrichtung gemäß Fig. 6 als Draufsicht mit einer eingestellten Getränkedose,
- Fig. 8: die Halterungsvorrichtung im ausgefahrenen Zustand, in der Gebrauchslage III, in perspektivischer Darstellung,
- Fig. 9: die Halterungsvorrichtung gemäß Fig. 8 als Draufsicht mit einem eingestellten Gefäß,
- Fig. 10: die Halterungsvorrichtung mit einer Führung, als Längsschnitt und
- Fig. 11: die Halterungsvorrichtung mit einer Führung im ausgefahrenen Zustand, in der Gebrauchslage I, als Schnittdarstellung.

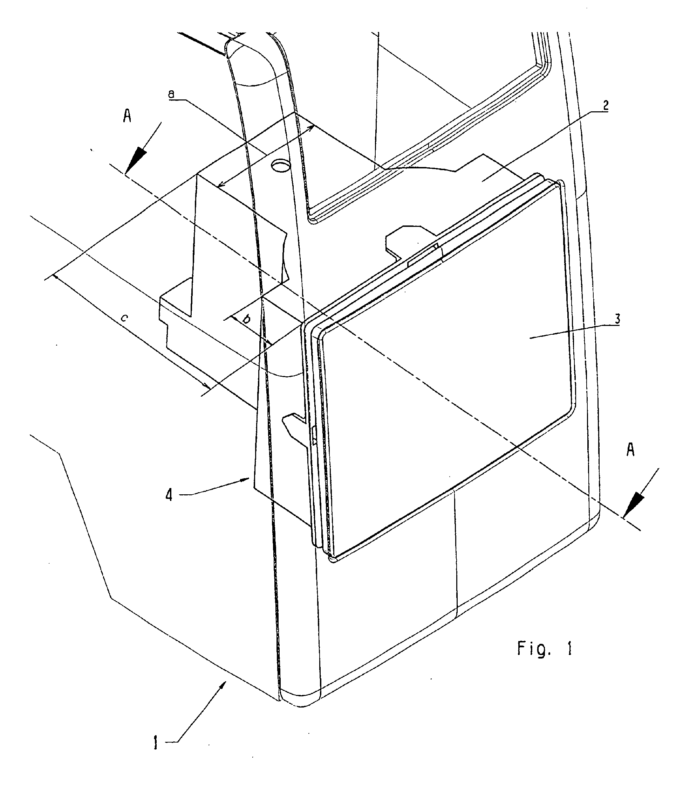

In der Figur 1 ist der hintere Bereich der Mittelkonsole 1 eines Personenkraftwagens gezeigt. Die Halterungsvorrichtung 4 wird an der Stirnseite der Mittelkonsole 1 eingebaut. und kann von auf dem Rücksitz befindlichen Personen zum Abstellen von Trinkbehältnissen genutzt werden. Aufgrund anderer funktionsbedingter Einbauten in der Mittelkonsole steht nur ein räumlich begrenzter Einbauraum zur Verfügung. Das Gehäuse 2 der Halterungsvorrichtung 4 ist an diesen Einbauraum angepasst und besitzt in horizontaler Ebene einen T-förmigen Querschnitt. Das Gehäuse 2 ist in seinen Dimensionen so ausgelegt, daß das Breitenmaß a ca. doppelt so groß ist wie das Tiefenmaß b. Die Gehäusetiefe c beträgt ca. 100 mm. Das T-förmige Gehäuse 2 besitzt eine Rückwand 2a, einen Boden 2b, eine Abdeckplatte 2c und die beiden Seitenwände 2d.

In der Rückwand 2a des Gehäuses 2 sind zwei Führungsstangen 5, 6 in unterschiedlicher Höhe befestigt, die Bestandteil jeweils einer teleskopierbaren Führungseinheit sind, um das Schubteil bzw. den Läufer 7 mit den Aufnahmen 8, 9 in die Gebrauchslage und wieder zurück in die Ausgangslage zu bewegen.

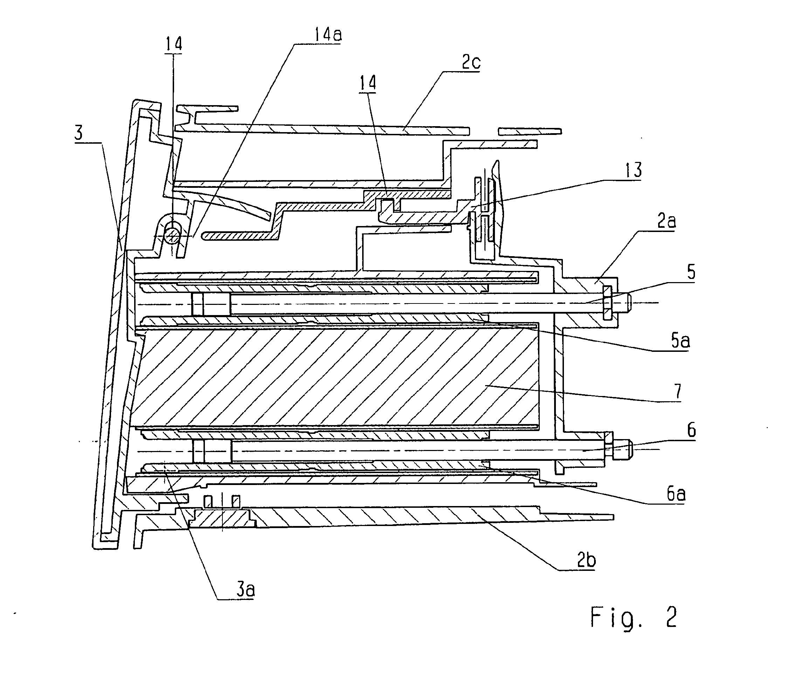

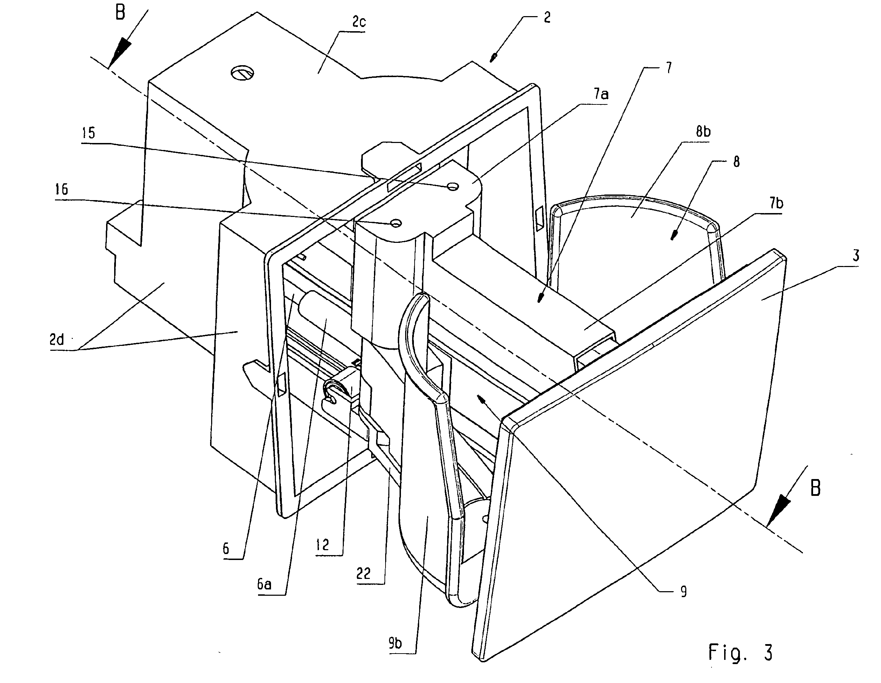

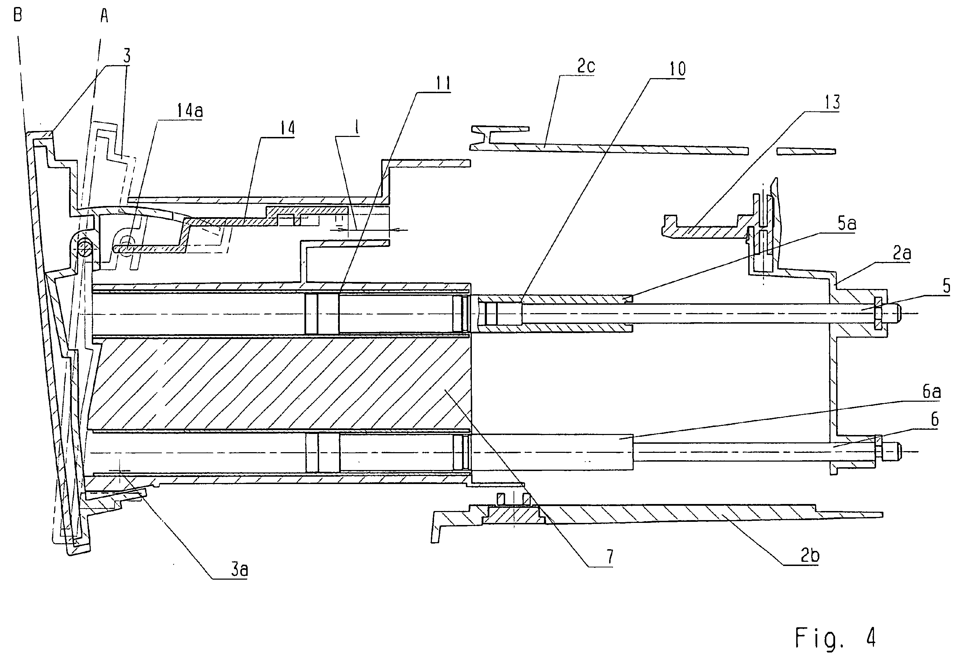

Auf den Führungsstangen 5, 6 sind axialbewegliche Hülsen 5a, 6a geführt, die mit dem Läufer 7 verbunden sind. Die Führungsstangen 5, 6 sind in ihrer Länge um ca. 5 bis 10 % kürzer als die Gehäusetiefe. Die Schubbewegung der Hülsen 5a, 6a ist über einen ersten Anschlag 10 und die weitere Schubbewegung des Läufers 7 über einen zweiten Anschlag 11 begrenzt (Fig. 4). Eine derartige Teleskopführung erfordert nur eine geringe Einbautiefe und ist aus der EP 0 872 377 A2 bekannt. In dem gezeigten Beispiel ist eine zweifache Führung nur deshalb erforderlich, um in der Gebrauchslage eine Verdrehung des Läufers 7 auszuschließen. Grundsätzlich reicht eine teleskopierbare Führung aus, wenn der Läufer 7 zusätzlich auf andere Art und Weise gegen ein Verdrehen gesichert ist. Die Steuerung des Bewegungsablaufes des Läufers 7 erfolgt in an sich bekannter Bauart über Triebfedern, Silikondämpfer und Herzkurve. Als Triebfedern sind eine oder mehrere Rollfedern 12 am Läufer 7 angeordnet (Fig. 3). An der Rückwand 2a des Gehäuses 2 ist der Arretierungshebel 13 drehbar befestigt, der in der Ausgangslage des Läufers 7 mit dem Herzkurvenbauteil 14 des Läufers 7 in Eingriff steht (Fig. 2). Das am Läufer 7 verschiebbar befestigte Herzkurvenbauteil 14 ist mehrfach abgewinkelt und besitzt an seinem freien Endabschnitt eine Öse 14a, in die die Blende 3 eingehängt ist. Die Blende 3 ist außerdem im unteren Bereich noch an dem Läufer 7 drehbeweglich gelagert. Die Lage der Drehachsen ist in den Schnittdarstellungen mit dem Bezugszeichen 3a gekennzeichnet. Durch die Blende 3 wird in der Ausgangslage die Öffnung des Gehäuses 2 vollständig abgedeckt. Während der Ausfahrbewegung des Läufers in die Gebrauchslage (Fig. 4), wird durch eine innerhalb des Läufers 7 angeordnete Feder, die in der Zeichnung nicht dargestellt ist, die Blende 3 von der in Fig. 4 gezeigten Stellung A in die Kippstellung B bewegt. Dabei wird das mit dem Läufer 7 verbundene Herzkurvenbauteil 14 um den Verschiebeweg I in Ausziehrichtung verschoben. Beim Zurückkippen der Blende 3 durch den Bediener in die Stellung A wird das Herzkurvenbauteil 14 wieder nach hinten verschoben und die Einfahrbewegung des Läufers durch die Rollfedern 12 ausgelöst.

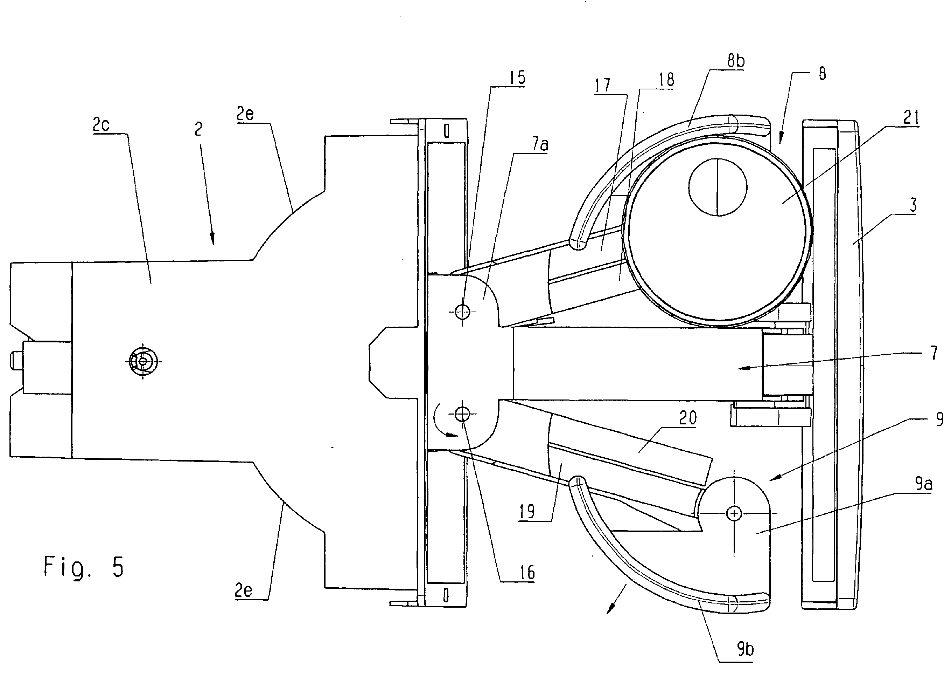

Der Läufer 7 besitzt an seinem hinteren Ende einen Abschnitt 7a mit zwei vertikalen Drehachsen 15, 16 zur Aufnahme von jeweils zwei seitlich aus- und einschwenkbaren Tragarmen 17, 18, 19, 20, wie in den Figuren 3 und 5 gezeigt. Der Abschnitt 7a des Läufers bzw. Schubteils 7 ist in seiner Breite kleiner ausgeführt als das Breitenmaß a des hinteren Gehäuseabschnittes, wodurch der Abschnitt 7a in der Ausgangslage in dem hinteren Gehäuseabschnitt mit der kleineren Breite versenkbar ist. An den beiden äußeren Tragarmen 17 und 19 sind die Aufnahmen 8 und 9 für die einzustellenden Gefäße 21 befestigt. Die Aufnahmen 8 und 9 bestehen aus einem Bodenteil 8a, 9a und einem mit diesem verbundenen, senkrecht angeordneten, gebogenen Wandabschnitt 8b, 9b.

Die Bodenteile 8a bzw. 9a sind mit einer U-förmigen Halterung versehen, mittels der die Aufnahmen 8, 9 an den jeweiligen äußeren Tragarmen 17, 19 drehbar befestigt sind. Die inneren Tragarme 18, 20 bilden eine zusätzliche Auflagefläche für die einzustellenden Gefäße 21. Die Schwenkbewegungen der inneren Tragarme 18, 20 werden jeweils synchron über nicht näher dargestellte Federelemente realisiert. Die äußeren Tragarme 17, 19 stehen ebenfalls unter Federbelastung und können in der Gebrauchslage drei verschiedene Stellungen I, II und III einnehmen, entsprechend dem Außendurchmesser der einzustellenden Gefäße 21. Durch im unteren Bereich des Läufers 7 angeordnete Steuerhebel 22 wird gewährleistet, daß die gebogenen Wandabschnitte 8b, 9b der beiden Aufnahmen 8, 9 bei einer Veränderung der Winkelstellung der äußeren Tragarme 17, 19 in die Stellungen II und III ihre ursprüngliche Position aus der Stellung I beibehalten. Die Innenseiten der gebogenen Wandabschnitte 8b, 9b werden durch die unter Federspannung stehenden äußeren Tragarme zu einer optimalen Anlage an die Außenwand des Gefäßes gedrückt. Im Einstellbereich der Gefäße 21 überragen die Wandabschnitte 8b, 9b in ihrer Höhe die obere Abdeckung 7b des Läufers 7. Der Bediener kann beim Einstellen des Gefäßes 21 dieses gegen die Innenseite des überstehenden Wandabschnittes 8b oder 9b drücken, wobei der äußere Tragarm 17 oder 19 ebenfalls nach außen gedrückt wird und dadurch die erforderliche Öffnung zum Einstellen des Gefäßes 21 zur Verfügung steht. Die ebene Fläche der tiefer liegenden Abdeckung 7b des Läufers 7 kann dabei noch als Abstellhilfe beim Einstellen des Gefäßes genutzt werden. Das Einstellen oder Entnehmen des Gefäßes ist somit problemlos durch eine Einhandbedienung möglich. Nach dem Einstellen des Gefäßes wird dieses durch den unter Federspannung stehenden äußeren Tragarm 17 oder 19 gegen die benachbarten Innenseiten des Läufers 7 und des unteren Abschnitts der Blende 3 gedrückt und dadurch sicher und in stabiler Lage gehalten, wobei durch die Oberseite der inneren Tragarme 18, 20 noch eine zusätzliche Auflagefläche gebildet ist. Beim Einstellen von im Außendurchmesser größeren Gefäßen gemäß den Stellungen II und III befindet sich der jeweilige äußere Tragarm 17, 19 in einer zu dem inneren Tragarm 18, 20 gespreizten Stellung, wodurch eine ausreichende und sichere Auflage für das eingestellte Gefäß gewährleistet wird.

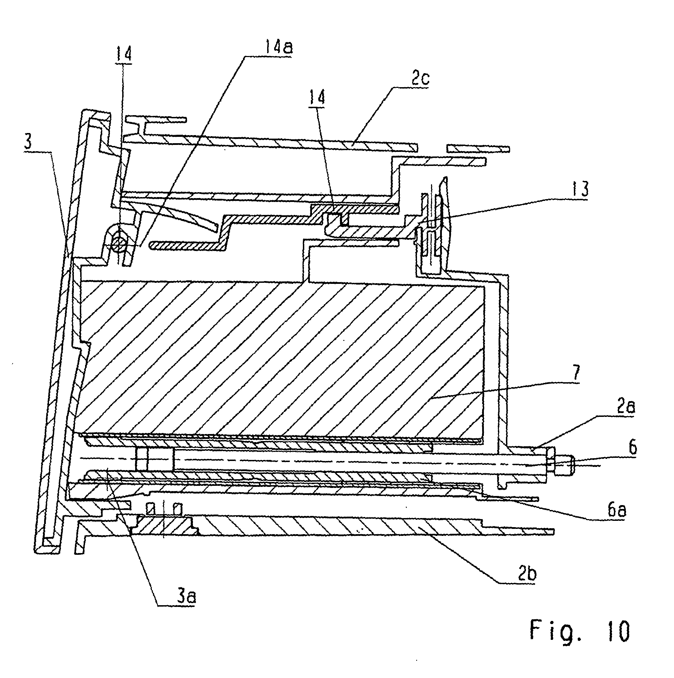

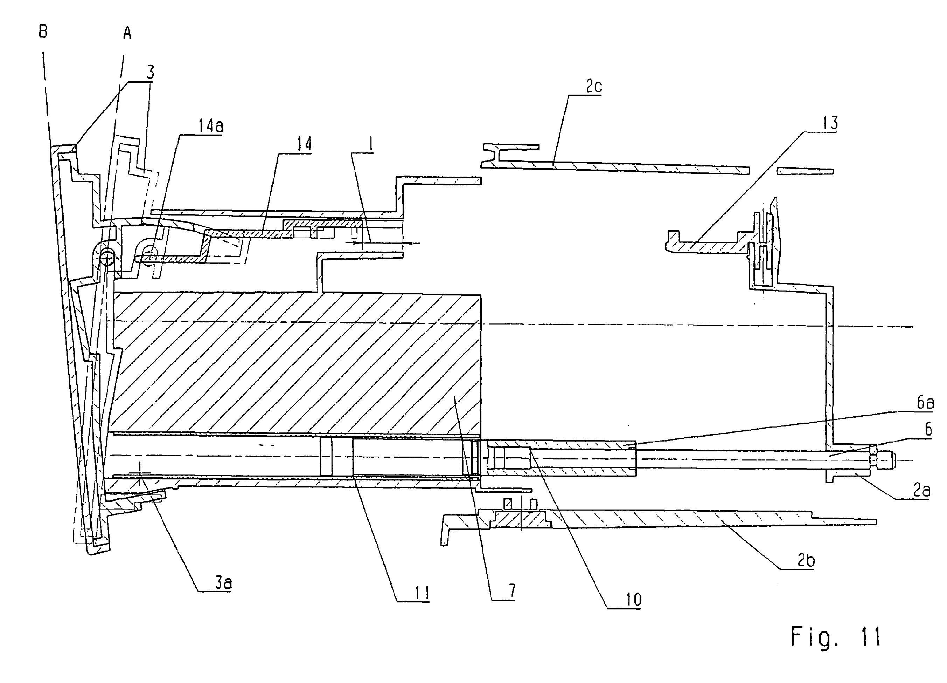

In den Figuren 10 und 11 ist noch eine Ausführungsvariante mit nur einer Führungseinheit 6, 6a gezeigt. Im Vergleich zu den in den Figuren 2 und 4 gezeigten Ausführungen mit zwei in der Höhe versetzt zueinander angeordneten Führungseinheiten 5, 5a, 6, 6a unterscheiden sich die Darstellungen in den Figuren 10 und 11 nur dadurch, daß die obere Führung 5, 5a weggefallen ist. Zur Sicherung dieser Führungseinheit 6, 6a gegen Verdrehen ist mittig an der Innenseite der Abdeckplatte 2c des Gehäuses 2 ein Steg angeordnet und an der Oberseite des Abschnittes 7a des Läufers 7 eine entsprechende Führungsnut. In den Figuren 10 und 11 ist diese Verdrehsicherung nicht zu sehen.

Die Funktions- und Vorgehensweise zum Einstellen von Gefäßen in die vorbeschriebene Halterungsvorrichtung ist folgende:

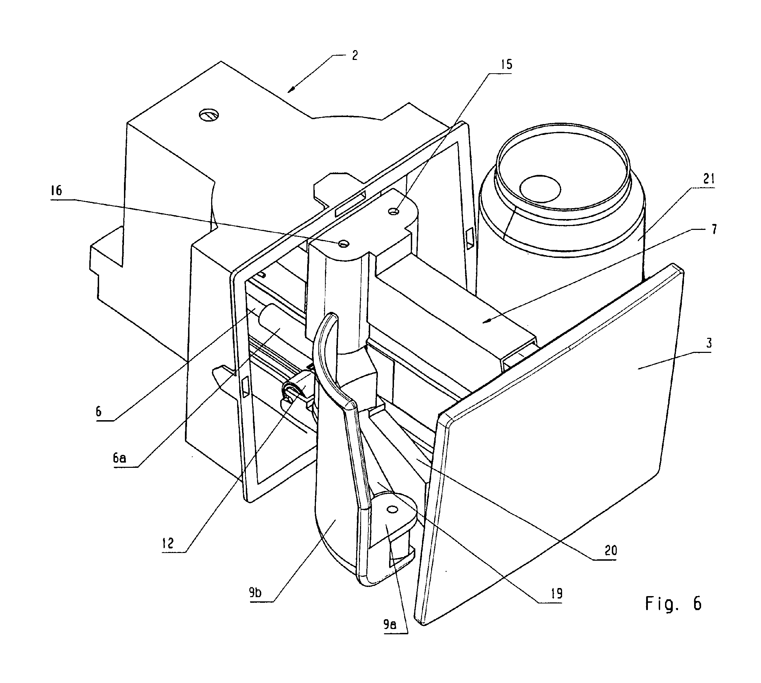

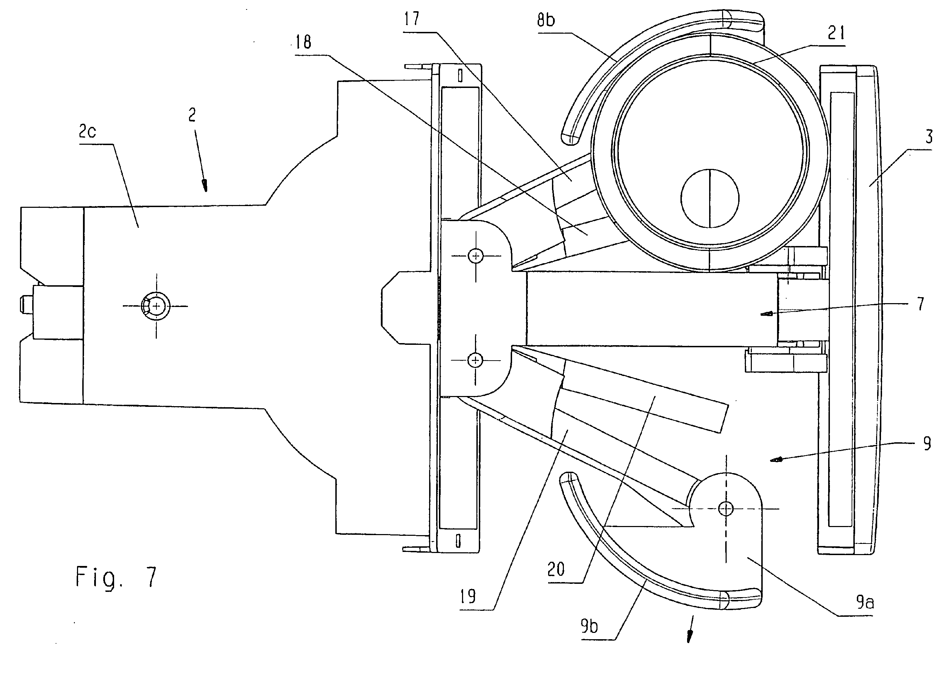

Durch eine vom Bediener auf die Blende 3 ausgeübte Druckbewegung wird automatisch über die bereits erwähnten Antriebsmittel der Läufer 7 in die Gebrauchslage bewegt. Dabei finden gleichzeitig noch folgende zwei Bewegungsabläufe statt. Die Blende 3 wird von ihrer Ausgangslage A in eine angekippte Stellung B (Fig. 4) bewegt und die Tragarme 17 und 18 sowie 19 und 20 werden durch Federelemente nach außen geschwenkt und nehmen die in den Figuren 3 und 5 gezeigte Stellung ein. Die Halterungsvorrichtung befindet sich nunmehr in der Gebrauchslage I, die zum Einstellen von Gefäßen 21 mit einem Außendurchmesser von ca. 53 mm bestimmt ist. Zum Einstellen eines im Außendurchmesser größeren Gefäßes, mit einem Durchmesser bis zu ca. 66 mm, wird der Wandabschnitt 8b oder 9b vom Bediener mit dem in der Hand befindlichen Gefäß nach außen, in die mit einem Pfeil gekennzeichnete Richtung, gedrückt und dabei gleichzeitig der äußere Tragarm 17 oder 19 weiter nach außen geschwenkt und die erforderliche Öffnung zum Einstellen des Gefäßes freigegeben (Figuren 6 und 7). Der innere Tragarm 18 oder 20 verändert dabei seine Ausgangsstellung nicht. Der jeweilige Steuerhebel 22 sorgt dafür, daß der Wandabschnitt 8b oder 9b während der Schwenkbewegung des äußeren Tragarmes 17, 19 in die optimale Anlagestellung für das Gefäß gedreht wird, wie in der in den Figuren 6 und 7 dargestellten Gebrauchslage II zu sehen ist.

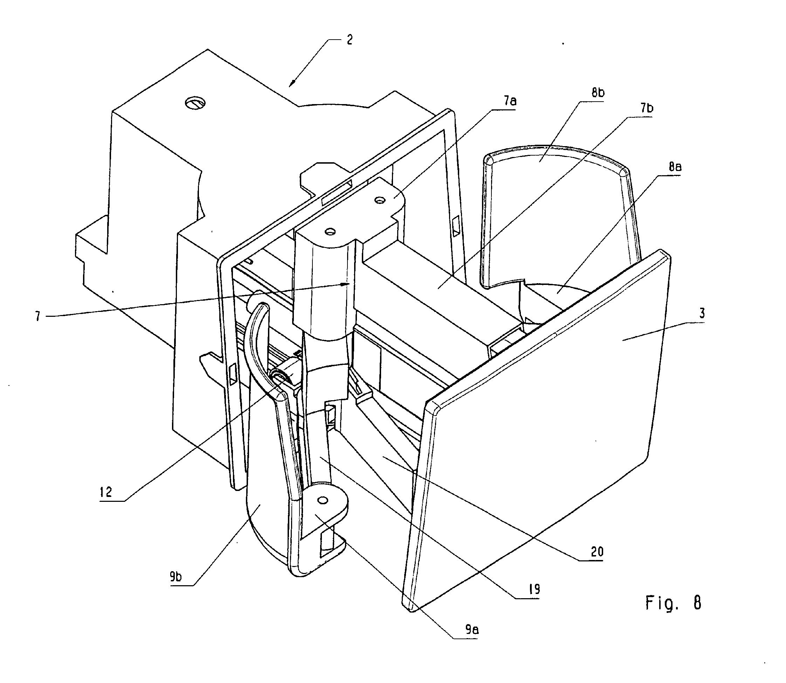

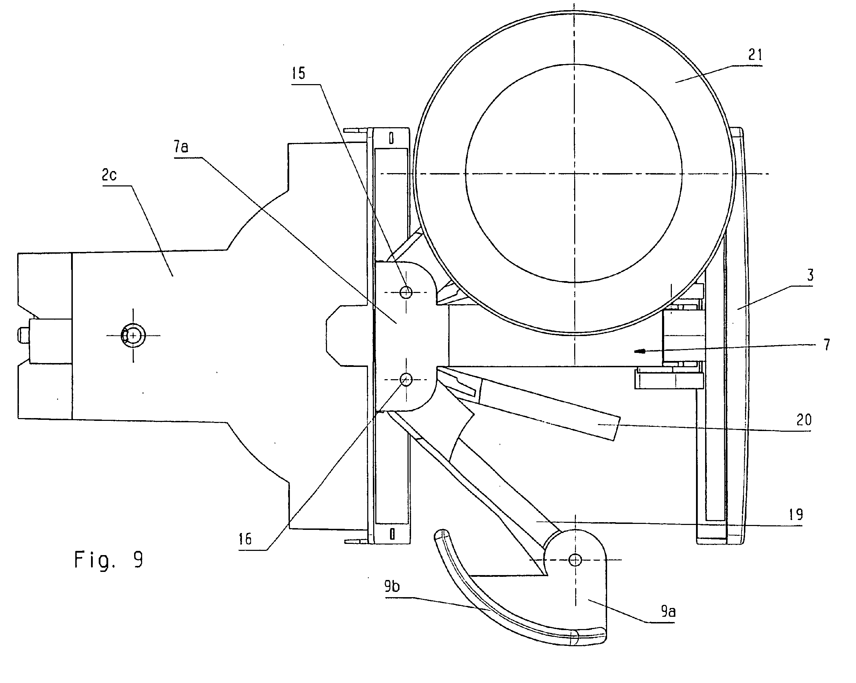

Die in den Figuren 8 und 9 gezeigte Gebrauchslage III ist zum Einstellen von Gefäßen mit einem Außendurchmesser von bis zu ca. 90 mm bestimmt. Im Vergleich zu der Gebrauchslage II sind die äußeren Tragarme 17, 19 in die maximal ausschwenkbare Endlage bewegt.

In allen drei Gebrauchslagen befindet sich die Innenseite der Wandabschnitte 8b, 9b stets in der gleichen Lageausrichtung bezogen auf die Mittellängsachse des Läufers 7. Nach dem Entnehmen des Gefäßes aus der entsprechenden Aufnahme 8 oder 9 geht der jeweilige äußere Tragarm 17 oder 19 wieder in die zu der Gebrauchslage I beschriebene Stellung zurück. Durch eine erneute Druckbetätigung auf die Blende 3 wird der Läufer 7 wieder eingefahren und in die Ausgangslage zurückbewegt. Durch die von den Rollfedern 12 ausgehende Einzugsbewegung werden die Tragarme 17 und 18 sowie 19 und 20 bei Berührung mit den vorderen Kanten der Seitenwände 2d in Richtung zu dem Läufer 7 gedrückt und durch die Steuerhebel 22 die Wandabschnitte 8b, 9b in eine vorteilhafte Einbaulage gedreht. Das Gehäuse 2 besitzt der Außenkontur der Wandabschnitte 8b, 9b angepasste bogenförmige Abschnitte 2 e, an denen die Wandabschnitte 8b, 9b in der Ausgangslage zur Anlage kommen.

## Patentansprüche

1. Halterungsvorrichtung für Gefäße in Kraftfahrzeugen, bestehend aus einem Gehäuse (2) mit einem hinteren Gehäuseabschnitt sowie mindestens einem mittig in dem Gehäuse (2) angeordneten aus- und einfahrbaren Schubteil (7), das in dem hinteren Gehäuseabschnitt versenkbar ist, und zwei in der Gebrauchslage seitlich neben dem Schubteil (7) angeordneten Aufnahmen (8, 9) für die einzustellenden Gefäße (21) sowie einer an dem in Auszugsrichtung zeigenden Ende des Schubteils (7) befestigten Blende (3), wobei an dem hinteren Abschnitt des Schubteils (7), der sich in der Gebrauchslage unmittelbar vor der Öffnung des Gehäuses (2) befindet, an beiden Seiten, in Auszugsrichtung zeigende, seitlich aus- und einschwenkbare Arme (17, 18, 19, 20) zur Einstellung von im Außendurchmesser unterschiedlich großen Gefäßen (21) angeordnet sind, **dadurch gekennzeichnet, daß** der hintere Gehäuseabschnitt eine sich in der Tiefe verringernde Breite (a) besitzt und die Arme als Tragarme (17, 18, 19, 20) ausgebildet sind, wobei zwei äußere Tragarme (17,19) und zwei innere Tragarme (18, 20) angeordnet sind, und an den in Auszugsrichtung zeigenden Endabschnitten der äußeren Tragarme (17, 19) ein Bodenteil (8a, 9a) um eine vertikale Achse drehbar befestigt ist und das Bodenteil (8a, 9a) mit einem senkrecht nach oben gerichteten Wandabschnitt (8b, 9b) verbunden ist, und der äußere Tragarm (17, 19) zur Einstellung von im Außendurchmesser größeren Gefäßen (21) in verschiedene Stellungen nach außen schwenkbar ist und der innere Tragarm (18, 20) als zusätzliche Auflagefläche für das einzustellende Gefäß (21) dient, und die Lageausrichtung des Wandabschnittes (8b, 9b) mittels eines Hebels (22) in Abhängigkeit von der Stellung des äußeren Tragarmes (17,19) steuerbar ist.

2. Halterungsvorrichtung nach Anspruch 1, **dadurch gekennzeichnet, daß** jeweils der innere und der äußere Tragarm (18, 17 bzw. 20, 19) eine gemeinsame vertikale Drehachse (15,16) besitzen.

3. Halterungsvorrichtung nach Anspruch 1, **dadurch gekennzeichnet, daß** der innere Tragarm (18, 20) an dem äußeren Tragarm (17, 19) drehgelenkig befestigt und federbelastet ist.

4. Halterungsvorrichtung nach Anspruch 3, **dadurch gekennzeichnet, daß** der innere Tragarm (18, 20) in dem äußeren Tragarm (17, 19) versenkbar angeordnet ist.

5. Halterungsvorrichtung nach einem der Ansprüche 1 bis 4, **dadurch gekennzeichnet, daß** die Wandabschnitte (8b, 9b) eine kreisförmig gebogene Mantelfläche aufweisen.

6. Halterungsvorrichtung nach einem der Ansprüche 1 bis 5, **dadurch gekennzeichnet, daß** die Blende (3) drehgelenkig und federbelastet an dem Schubteil (7) befestigt und in einer Öse (14a) eines Herzkurvenbauteils (14) eingehängt ist, das längsverschiebbar an dem Läufer (7) befestigt ist.

7. Halterungsvorrichtung nach einem der Ansprüche 1 bis 6, **dadurch gekennzeichnet, daß** die Wandabschnitte (8b, 9b) die Abdeckung (7b) des Läufers im Bereich der Einstellöffnungen (8, 9) überragen.

8. Halterungsvorrichtung nach einem der Ansprüche 1 bis 7, **dadurch gekennzeichnet, daß** zur axialbeweglichen Führung des Schubteils (7) dieses auf einer Hülse (5a, 6a) geführt ist, die auf einer in der Rückwand (2a) des Gehäuses (2) befestigten Führungsstange (5, 6) geführt ist, die ca. 5 bis 10 % kürzer ist als die Gehäusetiefe, und zur Begrenzung der Ausfahrbewegung des Schubteils (7) die Bewegung der Hülse über einen ersten Anschlag (10) und die Bewegung des Schubteils (7) über einen zweiten Anschlag (11) begrenzt ist.

9. Halterungsvorrichtung nach einem der Ansprüche 1 bis 8, **dadurch gekennzeichnet, daß** die Führungselemente (6, 6a, 7) in der Gebrauchslage gegen ein Verdrehen gesichert sind.

10. Halterungsvorrichtung nach einem der Ansprüche 1 bis 9, **dadurch gekennzeichnet, daß** das Schubteil (7) mittels einer Führungseinheit (6, 6a) oder mit zwei in der Höhe versetzt angeordneten Führungseinheiten (5, 5a, 6, 6a) geführt ist.

11. Halterungsvorrichtung nach einem der Ansprüche 1 bis 10, **dadurch gekennzeichnet, daß** die beiden Drehachsen (15, 16) in einer gemeinsamen vertikalen Ebene liegen und in gleichem Abstand zur Längsmittelachse des Schubteils (7) angeordnet sind.

12. Halterungsvorrichtung nach einem der Ansprüche 1 bis 11, **dadurch gekennzeichnet, daß** das Gehäuse (2) in horizontaler Ebene einen T-förmigen Querschnitt besitzt und die Seitenwände (2d) im Bereich des Überganges von dem breiten zu dem schmalen Gehäuseabschnitt konvex ausgebildete Wandabschnitte (2e) aufweisen, die in der Ausgangslage die Anlageflächen für die Wandabschnitte (8b, 9b) der Aufnahmen (8, 9) bilden.

## Claims

1. Holding device for containers in motor vehicles consisting of a housing (2) with a rear section of the housing as well as at least one extendable and retractable drawer (7) centrally positioned in the housing (2), which can fit flush in the rear section of the housing and two container receptacles (8, 9) laterally positioned next to the drawer (7) in the operating position for the containers (21) to be inserted in as well as a cover (3) attached to the end of the drawer (7) pointing in the direction of extension, with support arms (17, 18, 19, 20), for the insertion of containers of differently sized outside diameters (21), pointing in the direction of extension and able to swing out and in laterally and positioned on both sides on the rear section of the drawer (7) which in the operating position is directly in front of the opening of the housing (2), **characterized in that** the rear section of the housing has an internally decreasing width (a) and the arms comprising two outer support arms (17, 19) and two inner support arms (18, 20) are formed as support arms (17, 18, 19, 20) and that a floor part (8a, 9a) is pivoted around a vertical axis on the end sections of the outer support arms (17, 19) pointing in the direction of extension, and that the floor part (8a, 9a) is connected to a vertically positioned wall section (8b, 9b) and that the outer support arm (17, 19) can swing outwards in different positions for the insertion of containers (21) of larger outside diameter and that the inner support arm (18, 20) serves as an additional supporting surface for the container (21) to be inserted and that the adjustment of the position of the wall section (8b, 9b) is controllable by means of a lever (22) dependent on the position of the outer support arm (17, 19).

2. Holding device according to claim 1, **characterized in that** the inner and the outer support arm (18, 17 or 20, 19) each have a common vertical rotational axis (15, 16).

3. Holding device according to claim 1, **characterized in that** the inner support arm (18, 20) is spring loaded and pivoted on the outer support arm (17, 19).

4. Holding device according to claim 3, **characterized in that** the inner support arm (18, 20) can fit flush in the outer support arm (17, 19).

5. Holding device according to one of the claims 1 to 4, **characterized in that** the wall sections (8b, 9b) have an annularly curved circumferential area.

6. Holding device according to one of the claims 1 to 5, **characterized in that** the cover (3) is spring-loaded and pivoted on the drawer (7) and inserted in an eyelet (14a) of a cardioid component (14) that is attached to the slide (7) and movable along its length.

7. Holding device according to one of the claims 1 to 6, **characterized in that** the wall sections (8b, 9b) protrude over the cover (7b) of the slide in the area of the insertion openings (8, 9).

8. Holding device according to one of the claims 1 to 7, **characterized in that** to enable the drawer (7) to slide axially, it is carried on a sleeve (5a, 6a) running on a guide rod (5, 6) attached to the rear wall (2a) of the housing (2) which is about 5 to 10 % shorter than the depth of the housing and that to restrict the extension movement of the drawer (7), the movement of the sleeve and the movement of the drawer (7) are limited, respectively, by a first stop (10) and a second stop (11).

9. Holding device according to one of the claims 1 to 8, **characterized in that** the guide rods (6, 6a, 7) are protected against rotation in the operating position.

10. Holding device according to one of the claims 1 to 9, **characterized in that** the drawer (7) slides back and forth by means of a guide unit (6, 6a) or two guide units with one positioned above the other (5, 5a, 6, 6a).

11. Holding device according to one of the claims 1 to 10, **characterized in that** both rotational axes (15, 16) lie in a common vertical plane and are positioned at the same distance from the longitudinal centre line of the drawer (7).

12. Holding device according to one of the claims 1 to 11, **characterized in that** the housing (2) has a T-shaped cross section in the horizontal plane and the side walls (2d) in the area of transition from the wide to the narrow section of the housing have convexly shaped wall sections (2e) which in the starting position form the contact surfaces for the wall sections (8b, 9b) of the container receptacles (8, 9).

## Revendications

1. Dispositif de maintien pour contenants, placé dans les véhicules automobiles, composé d'un boîtier (2) présentant une section de boîtier arrière ainsi qu'au moins un élément coulissant (7), pouvant rentrer et sortir, qui est disposé au centre de l'intérieur du boîtier (2) et qui est escamotable dans la section de boîtier arrière, et de deux logements (8, 9) disposés dans la position d'utilisation latéralement à côté de l'élément coulissant (7) et destinés aux contenants (21) à poser ainsi que d'un cache (3) fixé à l'extrémité de l'élément coulissant (7) tournée dans le sens de sortie, des bras (17, 18, 19, 20) pouvant renter et sortir par pivotement latéral, tournés dans le sens de sortie et destinés à recevoir des contenants (21) au diamètre extérieur différent, étant disposés des deux côtés sur la section arrière de l'élément coulissant (7) se trouvant en position d'utilisation directement devant l'orifice du boîtier (2), **caractérisé en ce que** la section de boîtier arrière possède une largeur (a) se rétrécissant en profondeur et les bras sont réalisés en bras-supports (17, 18, 19, 20), deux bras-supports extérieurs (17, 19) et deux bras-supports intérieurs (18, 20) étant disposés, un élément de fond (8a, 9a) est fixé sur les sections terminales tournées dans le sens de sortie des bras-supports extérieurs (17, 19) de façon à pouvoir tourner autour d'un axe vertical et l'élément de fond (8a, 9a) est relié à une section de paroi (8b, 9b) dirigée verticalement vers le haut, le bras-support extérieur (17, 19) peut pivoter vers l'extérieur dans différentes positions afin de loger des contenants (21) d'un diamètre extérieur plus important et le bras-support intérieur (18, 20) sert de surface d'appui supplémentaire destinée au contenant à poser (21), et le positionnement de la section de paroi (8b, 9b) peut être commandé au moyen d'un levier (22) en fonction de la position du bras-support extérieur (17, 19).

2. Dispositif de maintien selon la revendication 1, **caractérisé en ce que** aussi bien le bras-support intérieur que le bras-support extérieur (18, 17 et 20, 19 respectivement) possèdent un axe de rotation (15, 16) vertical commun.

3. Dispositif de maintien selon la revendication 1, **caractérisé en ce que** le bras-support intérieur (18, 20) est fixé sur le bras-support extérieur (17, 19) de façon à pouvoir tourner comme une charnière et en étant sollicité par la tension d'un ressort.

4. Dispositif de maintien selon la revendication 3, **caractérisé en ce que** le bras-support intérieur (18, 20) est disposé en étant escamotable dans le bras-support extérieur (17, 19).

5. Dispositif de maintien selon l'une quelconque des revendications 1 à 4, **caractérisé en ce que** les sections de paroi (8b, 9b) présentent une enveloppe courbée en cercle.

6. Dispositif de maintien selon l'une quelconque des revendications 1 à 5, **caractérisé en ce que** le cache (3) est fixé sur l'élément coulissant (7) de façon à pouvoir tourner comme une charnière et en étant sollicité par la tension d'un ressort, et est accroché dans un oeillet (14a) d'un composant cardioïde (14) qui est fixé sur le chariot (7) de façon à pouvoir se déplacer longitudinalement.

7. Dispositif de maintien selon l'une quelconque des revendications 1 à 6, **caractérisé en ce que** les sections de paroi (8b, 9b) dépassent du recouvrement (7b) du chariot dans la zone des orifices d'insertion (8, 9).

8. Dispositif de maintien selon l'une quelconque des revendications 1 à 7, **caractérisé en ce qu'**afin de pouvoir se déplacer axialement, l'élément coulissant (7) est guidé sur un manchon (5a, 6a) qui est guidé sur une tige de guidage (5, 6) fixée dans la paroi arrière (2a) du boîtier (2) et qui est env. 5 à 10 % inférieure à la profondeur du boîtier, et afin de limiter la sortie de l'élément coulissant (7), le déplacement du manchon est limité par l'intermédiaire d'une première butée (10) et le déplacement de l'élément coulissant (7) est limité par l'intermédiaire d'une seconde butée (11).

9. Dispositif de maintien selon l'une quelconque des revendications 1 à 8, **caractérisé en ce que** toute rotation des éléments de guidage (6, 6a, 7) est rendue impossible dans la position d'utilisation.

10. Dispositif de maintien selon l'une quelconque des revendications 1 à 9, **caractérisé en ce que** l'élément coulissant (7) est guidé au moyen d'une unité de guidage (6, 6a) ou de deux unités de guidage (5, 5a, 6, 6a) décalées en hauteur les unes par rapport aux autres.

11. Dispositif de maintien selon l'une quelconque des revendications 1 à 10, **caractérisé en ce que** les deux axes de rotation (15, 16) se trouvent dans un plan vertical commun et sont disposés à même distance de l'axe médian longitudinal de l'élément coulissant (7).

12. Dispositif de maintien selon l'une quelconque des revendications 1 à 11, **caractérisé en ce que** le boîtier (2) possède dans le plan horizontal une section transversale en forme de T et les parois latérales (2d) présentent dans la zone de transition allant de la section de boîtier large vers la section de boîtier étroite des sections de paroi (2e) de forme convexe qui forment, dans la position initiale, les surfaces d'appui pour les sections de paroi (8b, 9b) des logements (8, 9).
